# EUROPÄISCHE PATENTSCHRIFT

(11) **EP 1 621 899 B1**
(45) Veröffentlichungstag und Bekanntmachung des Hinweises auf die Patenterteilung: **09.09.2009**
(21) Anmeldenummer: 04103650.0
(22) Anmeldetag: 29.07.2004
(51) Int. Cl.: G01T 1/29

(54) **Verfahren zum Auslesen von in einer Phosphorschicht gespeicherten Informationen**
Method for reading out the information stored in a phosphor layer
Procédé pour lire les informations contenues dans une couche phosphore

(43) Veröffentlichungstag der Anmeldung: 01.02.2006
(73) Patentinhaber: Agfa-Gevaert HealthCare GmbH, 50670 Köln (DE)
(72) Erfinder: Reiser, Georg Dr., 80337, München (DE)

(56) Entgegenhaltungen:
- US-A- 4 922 103
- US-A1- 2001 045 535

## Beschreibung

Die Erfindung betrifft ein Verfahren zum Auslesen von in einer Phosphorschicht gespeicherten Informationen gemäß dem Oberbegriff von Anspruch 1.

Gattungsgemäße Verfahren werden, insbesondere für medizinische Zwecke, im Bereich der Computer-Radiographie (CR) eingesetzt. Hierbei werden Röntgenaufnahmen in sogenannten Speicherphosphoren aufgezeichnet, indem die durch ein Objekt, beispielsweise einen Patienten, hindurchtretende Röntgenstrahlung als latentes Bild in einer Speicherphosphorschicht gespeichert wird. Zum Auslesen des gespeicherten Bildes wird die Speicherphosphorschicht mit Stimulationslicht bestrahlt und dabei zur Aussendung von Emissionslicht angeregt, dessen Intensität von der jeweils gespeicherten Bildinformation abhängt. Das Emissionslicht wird von einem optischen Detektor erfasst und in elektrische Signale umgewandelt, welche nach Bedarf weiterverarbeitet und auf einem Monitor dargestellt oder an einem entsprechenden Ausgabegerät, wie z. B. einem Drucker, ausgegeben werden können.

Die EP 1 319 963 A1 beschreibt ein Verfahren, bei dem ein Detektor über eine Phosphorschicht geführt wird und dabei das von einzelnen zeilenförmigen Bereichen der Phosphorschicht ausgesandte Emissionslicht erfasst. Die Erfassung des von einem zeilenförmigen Bereich ausgesandten Emissionslichts erfolgt während einer einstellbaren Integrationsdauer. Aufgrund des kontinuierlichen Vorschubs des Detektors während der Integrationsdauer wird die Breite dieses Bereichs in Vorschubrichtung durch die Integrationsdauer bestimmt. Insbesondere bei niedrigen Intensitäten des Emissionslichts wird eine längere Integrationsdauer eingestellt, um die Breite der zeilenförmigen Bereiche zu vergrößern. Hierdurch kann der Anteil des sogenannten Ausleserauschens am Detektorsignal vermindert und folglich das Signal/Rausch-Verhältnis verbessert werden.

Es hat sich jedoch herausgestellt, dass eine längere Integrationsdauer nicht in allen Anwendungsfällen zu einem besseren Signal/Rausch-Verhältnis führt. Vielmehr kann in bestimmten Fällen das Rauschen im Verhältnis zum Signal des erfassten Emissionslichts mit der Integrationsdauer zunehmen, was ein insgesamt schlechteres Signal/Rausch-Verhältnis zur Folge hat.

Bei dem aus US 2001/0045535 A1 bekannten Verfahren wird ein Korrektursignal während des Auslesens eines bild losen Bereichs ("non-image region") der Phosphorschicht oder bei abgeschalteter Stimulationslichtquelle erfasst.

Es ist Aufgabe der Erfindung, ein Verfahren zum Auslesen von in einer Phosphorschicht gespeicherten Informationen anzugeben, bei welchem das Signal/RauschVerhältnis verbessert wird.

Diese Aufgabe wird gemäß Anspruch 1 dadurch gelöst, dass die Lichtquelle während der Bewegung des Detektors relativ zu der Phosphorschicht mindestens einmal vorübergehend abgeschaltet wird und bei vorübergehend abgeschalteter Lichtquelle ein Untergrund, welcher insbesondere von Umgebungslicht und/oder Dunkelströmen im Detektor verursacht wird, von dem Detektor erfasst und in ein entsprechendes Untergrundsignal umgewandelt wird. Das Untergrundsignal wird für eine Korrektur der aus dem erfassten Emissionslicht abgeleiteten Emissionslichtsignale herangezogen. Darüber hinaus ist vorgesehen, dass der Untergrund von dem Detektor während einer Untergrund-Integrationsdauer erfasst wird, welche kleiner ist als eine Vorschubdauer für die Bewegung des Detektors um die Breite eines Bereichs der Phosphorschicht in Vorschubrichtung des Detektors. Hierdurch wird erreicht, dass der Untergrund erfasst wird, während sich der Detektor über einen Teil eines auszulesenden Bereichs der Phosphorschicht bewegt. Die Korrektur des von diesem Bereich ausgesandten und erfassten Emissionslichts ist hierdurch besonders genau.

Die Erfindung basiert auf dem Gedanken, zusätzlich zur Erfassung des Emissionslichts während der Bewegung des Detektors über die einzelnen Bereiche der Phosphorschicht eine oder mehrere sogenannte Dunkelmessungen durchzuführen. Bei den Dunkelmessungen wird bei vorübergehend abgeschalteter Lichtquelle jeweils ein Untergrund erfasst, welcher beispielsweise von Umgebungslicht, Dunkelströmen im Detektor oder anderen Störungen, wie dem sogenannten Ausleserauschen, verursacht wird und den bei der Erfassung des Emissionslichts erhaltenen Emissionslichtsignalen überlagert ist. Die Emissionslichtsignale werden dann mit den bei den Dunkelmessungen erhaltenen Untergrundsignalen korrigiert, wodurch der Einfluss des Untergrunds bei der Erfassung des Emissionslichts eliminiert wird. Aufgrund der während der Bewegung des Detektors über die einzelnen Bereiche der Phosphorschicht vorgenommenen Dunkelmessungen wird gewährleistet, dass der jeweilige Untergrund in räumlicher Nähe zu den jeweils auszulesenden einzelnen Bereichen der Phosphorschicht erfasst wird. Hierdurch können insbesondere Umgebungslichteinflüsse mit hoher Genauigkeit eliminiert werden.

Demzufolge wird mit dem erfindungsgemäßen Verfahren das Signal/RauschVerhältnis gegenüber aus dem Stand der Technik bekannten Verfahren verbessert. Insbesondere werden Störungen und Rauschanteile aufgrund von Umgebungslicht mit besonders hoher Zuverlässigkeit eliminiert.

Vorzugsweise wird das von einem Bereich ausgesandte Emissionslicht von dem Detektor während einer Integrationsdauer erfasst, wobei die Summe aus der Unund der Integrationsdauer kleiner oder gleich der Vorschubdauer ist. Hierdurch kann in zwei aufeinander folgenden Messungen - also bei größtmöglicher zeitlicher und örtlicher Nähe - sowohl das von einem Bereich ausgesandte Emissionslicht als auch der in diesem Bereich vorhandene Untergrund erfasst werden. Gleichzeitig wird der Anteil des sogenannten Dunkelrauschens am Emissionslichtsignal gering gehalten. Das Signal/Rausch-Verhältnis wird dadurch insgesamt noch weiter verbessert.

Vorteilhafterweise sind Integrationsdauer und Untergrund-Integrationsdauer gleich. Dadurch gibt das erhaltene Untergrundsignal die bei der Erfassung des Emissionslichts miterfassten Untergrundanteile auch quantitativ wieder. Das Untergrundsignal kann dann direkt zur Korrektur der jeweiligen Emissionslichtsignale herangezogen werden. Falls die Integrationsdauer und die Untergrund-Integrationsdauer jedoch von unterschiedlicher Dauer sind, muss Letztere auf die entsprechende Dauer der Integrationsdauer umgerechnet werden, damit der bei unterschiedlichen Integrationsdauern im Allgemeinen unterschiedlich starke Einfluss des Untergrunds berücksichtigt werden kann.

Es ist außerdem bevorzugt, dass ein Bereich der Phosphorschicht während einer Stimulationsdauer zur Aussendung von Emissionslicht angeregt wird, wobei die Stimulationsdauer kleiner oder gleich der Integrationsdauer ist. Dies erlaubt eine einfache Steuerung des Ein- und Ausschaltens der Lichtquelle und des Detektors. Außerdem wird insbesondere durch eine Stimulationsdauer, die kleiner ist als die Integrationsdauer, verhindert, dass das bei abgeschalteter Lichtquelle auftretende sogenannte Nachleuchten der Phosphorschicht bei der Erfassung des Untergrunds fälschlicherweise mit erfasst wird. Hierdurch wird ein hohes Signal/Rausch-Verhältnis der Emissionslichtsignale mit großer Zuverlässigkeit gewährleistet.

Vorzugsweise wird der Detektor und/oder die Lichtquelle relativ zu der Phosphorschicht mit einer konstanten Vorschubgeschwindigkeit bewegt. Hierdurch wird eine hohe und gut reproduzierbare Auslesegenauigkeit erreicht. Die Vorschubdauer für die Bewegung des Detektors um die Breite eines Bereichs der Phosphorschicht entspricht hierbei dem Quotienten aus der Breite eines Bereichs und der Vorschubgeschwindigkeit.

Es ist außerdem bevorzugt, dass die Bereiche der Phosphorschicht jeweils die Form einer Zeile aufweisen, wobei der Detektor und/oder die Lichtquelle senkrecht zur Längsausdehnung der Zeile relativ zur Phosphorschicht bewegt wird bzw. werden. Auf diese Weise wird die gesamte in einer Zeile der Phosphorschicht gespeicherte Information innerhalb der jeweils eingestellten Integrationsdauer des Detektors auf einmal erfasst, so dass die Phosphorschicht besonders schnell ausgelesen werden kann. Entsprechendes gilt für die Erfassung des jeweiligen Untergrunds.

In einer weiteren bevorzugten Ausgestaltung des erfindungsgemäßen Verfahrens ist vorgesehen, dass die Erfassung des Untergrunds und/oder die Erfassung des Emissionslichts durch ein Pulssignal gesteuert wird, wobei die Untergrund-Integrationsdauer bzw. die Integrationsdauer durch die jeweilige Pulsbreite der einzelnen Pulse des Pulssignals gegeben ist. Die Steuerung der Erfassung des Untergrund bzw. Emissionslichts lässt sich hierdurch auf einfache Weise realisieren.

Vorzugsweise wird als Pulssignal ein periodisches Pulssignal, insbesondere mit rechteckförmigen Pulsen, verwendet. Die Periodendauer des Pulssignals ist hierbei so gewählt, dass diese der halben Vorschubdauer des Detektors entspricht. Innerhalb der Vorschubdauer erfolgt dann während der ersten Periode die Stimulation und Erfassung des Emissionslichts und während der zweiten Periode die Erfassung des Untergrunds bei abgeschalteter Lichtquelle. Die Reihenfolge der Erfassung des Emissionslichts bzw. Untergrunds kann aber auch umgekehrt sein.

In einer weiteren Variante des erfindungsgemäßen Verfahrens ist vorgesehen, dass bei einer Bewegung des Detektors um mehrere Breiten in Vorschubrichtung der Untergrund mehrmals erfasst und dabei in mehrere entsprechende Untergrundsignale umgewandelt wird, aus welchen durch Mittelung ein mittleres Untergrundsignal abgeleitet wird. Das mittlere Untergrundsignal wird dann für eine Korrektur der Emissionslichtsignale eines oder mehrerer einzelner Bereiche der Phosphorschicht herangezogen. Aufgrund der Mittelung werden Rauschanteile im mittleren Untergrundsignal gegenüber den Rauschanteilen in den einzelnen Untergrundsignalen deutlich reduziert. Dadurch kann die Korrektur der Emissionslichtsignale mit besonders hoher Genauigkeit durchgeführt werden.

Weitere Merkmale und Vorteile der Erfindung ergeben sich aus der folgenden Beschreibung bevorzugter Ausführungsformen und Anwendungsbeispiele, wobei Bezug auf die beigefügten Zeichnungen genommen wird. Die Darstellung der Ausführungsformen ist hierbei nicht maßstabsgetreu.

Es zeigen:
- Fig. 1: eine Vorrichtung zur Durchführung des erfindungsgemäßen Verfahrens;
- Fig. 2: eine auszulesende Phosphorschicht in Draufsicht; und
- Fig. 3: ein Beispiel für ein Pulssignal zur Steuerung des erfindungsgemäßen Verfahrens.

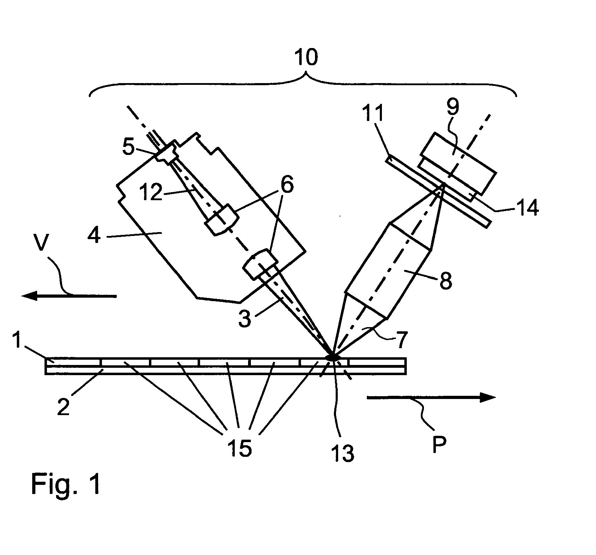

Figur 1 zeigt eine Vorrichtung zur Durchführung des erfindungsgemäßen Verfahrens. Eine auszulesende Phosphorschicht 1 befindet sich auf einer Trägerschicht 2 und wird mit Stimulationslicht 3 bestrahlt, welches von einer Lichtquelle 4 erzeugt wird. Das durch das Stimulationslicht 3 in der Phosphorschicht 1 angeregte Emissionslicht 7 wird mit einem Detektor 9 erfasst. Die Lichtquelle 4 und der Detektor 9, einschließlich einer Abbildungseinrichtung 8 und eines optischen Filters 11, bilden zusammen den Scanner 10, welcher während des Auslesens in Vorschubrichtung V relativ zur Phosphorschicht 1 bewegt wird.

Die Lichtquelle 4 weist mehrere einzelne Strahlungsquellen 5 sowie eine Fokussiereinrichtung 6 auf, welche die von den Strahlungsquellen 5 ausgehenden Stimulationslichtbündel 12 auf die Phosphorschicht 1 fokussieren. Die einzelnen Strahlungsquellen 5 - beispielsweise Leuchtdioden oder Laserdioden - sind in einer senkrecht zur Figurenebene verlaufenden Zeile angeordnet. Die Fokussiereinrichtung 6 weist zwei längliche Zylinderlinsen auf, welche im Wesentlichen parallel zu den in einer Zeile angeordneten einzelnen Strahlungsquellen 5 verlaufen. Die von den einzelnen Strahlungsquellen 5 ausgehenden divergenten Stimulationslichtbündel 12 werden durch die Fokussiereinrichtung 6 in Figurenebene gebündelt und treffen als konvergentes Strahlungsbündel des Stimulationslichts 3 auf die Phosphorschicht 1. Senkrecht zur Figurenebene überlagern sich die divergenten Stimulationslichtbündel 12 der einzelnen Strahlungsquellen 5 in der We i-se, dass das konvergente Strahlungsbündel in Form einer senkrecht zur Figurenebene verlaufenden, kontinuierlichen Stimulationslichtlinie 13 auf die Phosphorschicht 1 trifft.

Das im Bereich der Stimulationslichtlinie 13 in der Phosphorschicht 1 angeregte und abgestrahlte Emissionslicht 7 wird mit einem Detektor 9 ortsaufgelöst erfasst. Hierzu weist der Detektor 9 eine Vielzahl von lichtempfindlichen Detektorelementen 14 auf, welche entlang einer senkrecht zur Figurenebene verlaufenden Linie angeordnet sind. Das im Bereich der Stimulationslichtlinie 13 auf der Phosphorschicht 1 emittierte Emissionslicht 7 wird mittels einer Abbildungseinrichtung 8 auf die lichtempfindlichen Detektorelemente 14 des Detektors 9 abgebildet. Der Detektor 9 ist vorzugsweise als CCD- oder Photodiodenzeile ausgebildet.

Als Abbildungseinrichtung 8 eignen sich vorzugsweise Mikrolinsen, welche entlang einer senkrecht zur Figurenebene - und damit parallel zum zeilenförmig ausgebildeten Detektor 9 - verlaufenden Linie angeordnet sind. Alternativ eignen sich hierzu auch Gradientenindex-Linsen, insbesondere selbstfokussierende Linsen, welche ebenfalls in einer senkrecht zur Figurenebene verlaufenden Zeile angeordnet sind. Vorzugsweise werden die einzelnen Bereiche 15 durch die Abbildungseinrichtung 8 im Maßstab 1:1 auf die lichtempfindlichen Flächen 14 des Detektors 9 abgebildet.

Optional kann im Strahlengang zwischen der Phosphorschicht 1 und den Detektoren 9 ein optisches Filter 11 vorgesehen sein, welches im Wellenlängenbereich des Emissionslichts 7 durchlässig ist und im Wellenlängenbereich des Stimulationslichts im Wesentlichen undurchlässig ist. Hierdurch wird gewährleistet, dass die Erfassung des Emissionslichts nicht durch Anteile des Stimulationslichts, welche an der Phosphorschicht 1 reflektiert werden und zum Detektor 9 gelangen können, verfälscht wird.

Im gezeigten Beispiel wird der Scanner 10 mit einem nicht dargestellten Transportmechanismus in Vorschubrichtung V über die ruhende Phosphorschicht 1 bewegt, wobei durch die Stimulationslichtlinie 13 unterschiedliche zeilenförmige Bereiche 15 der Phosphorschicht 1 sukzessive angeregt werden und das jeweils ausgesandte Emissionslicht 7 von den lichtempfindlichen Detektorelementen 14 des Detektors 9 ortsaufgelöst erfasst wird, wobei entsprechende Emissionslichtsignale erzeugt werden.

Vorzugsweise ist die Lichtquelle 4 bezüglich der Vorschubrichtung V vor dem Detektor 9 angeordnet, d.h. der Scanner 10 läuft mit der Lichtquelle 4 voraus über die Phosphorschicht 1. Hierdurch wird erreicht, dass ein größerer Anteil des in der Phosphorschicht gestreuten Stimulationslichts 3 in Richtung bereits ausgelesener Bereiche 15 gestreut wird, während nur ein kleinerer Anteil des Stimulationslichts 3 in Richtung noch nicht ausgelesener Bereiche 15 der Phosphorschicht 1 gestreut wird. Dadurch können Intensitäts- und Schärfeverluste aufgrund einer Streuung von Stimulationslicht 3 innerhalb der Phosphorschicht 1 vermindert werden.

Im dargestellten Beispiel wird der Scanner 10 über eine ortsfeste Phosphorschicht 1 bewegt. Die obigen Ausführungen gelten selbstverständlich aber auch dann, wenn der Scanner 10 ortsfest ist und die auf der Trägerschicht 2 befindliche Phosphorschicht 1 in Bewegungsrichtung P relativ zu diesem transportiert wird. Dasselbe gilt analog für Ausgestaltungen, bei denen sowohl der Scanner 10 in Vorschubrichtung V als auch die Phosphorschicht 1 in Bewegungsrichtung P bewegt werden.

Während der Scanner 10 in Vorschubrichtung V relativ zur Phosphorschicht 1 bewegt wird, überstreicht die Stimulationslichtlinie 13 einzelne Bereiche 15 der Phosphorschicht 1 und regt diese nacheinander zur Aussendung von Emissionslicht 7 an, welches vom Detektor 9 für jeden der einzelnen Bereiche 15 erfasst wird.

Der Detektor 9 benötigt für die Bewegung um die Breite eines Bereichs 15 eine Vorschubdauer T_{V}. Im Verlauf dieser Bewegung erfassen die lichtempfindlichen Flächen 14 des Detektors 5 während einer Integrationsdauer T_{I} das von dem Bereich 15 ausgesandte Emissionslicht 7.

Die Breite der Bereiche 15 in Vorschubrichtung V liegt typischerweise zwischen etwa 10 µm und 500 µm. Die Querausdehnung der lichtempfindlichen Flächen 14 des Detektors 9 senkrecht zur Richtung der Detektorzeile liegt typischerweise zwischen etwa 10 µm und 600 µm.

Vorzugsweise ist die Querausdehnung der lichtempfindlichen Flächen 14 größer als die Breite der Bereiche 15 in Vorschubrichtung V. Beispielsweise liegt die Breite der Bereiche 15 bei etwa 50 µm, während die Querausdehnung der lichtempfindlichen Flächen 14 bei etwa 400 µm liegt. Die Breite eines einzelnen Bereichs 15 in Vorschubrichtung V ist in diesem Fall durch die Breite des Abschnitts der Phosphorschicht 1 gegeben, den die Stimulationslichtlinie 13 während ihres Vorschubs in Vorschubrichtung V innerhalb der Vorschubdauer T_{V} zur Aussendung von Emissionslicht 7 anregt. Die Ortsauflösung in Vorschubrichtung V, d.h. die kleinstmögliche Breite eines einzelnen Bereichs 15, wird hierbei durch die Breite der Stimulationslichtlinie 13 in Vorschubrichtung V bestimmt.

Zur besseren Veranschaulichung sind die Bereiche 15 der Phosphorschicht 1 und die lichtempfindlichen Flächen 14 des Detektors 9 in Fig. 1 jeweils stark vergrößert und nicht maßstabsgetreu dargestellt.

Vorzugsweise ist die Integrationsdauer T_{I} des Detektors 9, während der das von einem Bereich 15 ausgesandte Emissionslicht 7 vom Detektor 9 erfasst wird, kürzer als die Vorschubdauer T_{V}, d.h. T_{I} < T_{V}. Hierdurch wird das sog. thermisch generierte Dunkelrauschen, das von der Größe der lichtempfindlichen Flächen 14, der Temperatur und der Integrationsdauer T_{I} abhängt, gegenüber den aus den Stand der Technik bekannten Verfahren vermindert und damit das Signal/RauschVerhältnis insgesamt erhöht. Da der Detektor 9 bei der Erfassung des Emissionslichts 7 während der Integrationsdauer T_{I} nur einen Teil der Breite des Bereichs 15 überstreicht, werden darüber hinaus Informationsverluste, die durch die sog. Bewegungsunschärfe verursacht werden, vermindert.

Während der Bewegung des Detektors 9 über die Phosphorschicht 1 wird darüber hinaus bei vorübergehend abgeschalteter Lichtquelle 4, d.h. ohne die Phosphorschicht 1 mit Stimulationslicht 3 zu bestrahlen, mit dem Detektor 9 ein Untergrund erfasst und in ein entsprechendes Untergrundsignal umgewandelt. Die bei der Erfassung des Emissionslichts 7 erzeugten Emissionslichtsignale werden anschließend mit dem Untergrundsignal korrigiert, z.B. durch Subtraktion des Untergrundsignals von den Emissionslichtsignalen. Hierdurch werden z.B. Einflüsse von unerwünschtem Umgebungslicht, Dunkelströmen im Detektor 9 sowie anderen Störquellen eliminiert.

Die Erfassung des Untergrunds erfolgt hierbei während einer Untergrund-Integrationsdauer T_{U}, die kürzer ist als die Vorschubdauer T_{V}. Insbesondere erfolgen die Erfassung sowohl des Untergrunds als auch des Emissionslichts 7 eines Bereichs 15 innerhalb der Vorschubdauer T_{V}, d.h. die Summe aus Untergrund-Integrationsdauer T_{U} und Integrationsdauer T_{I} ist kleiner oder gleich der Vorschubdauer T_{V}: T_{U} + T_{I} ≤ T_{V}.

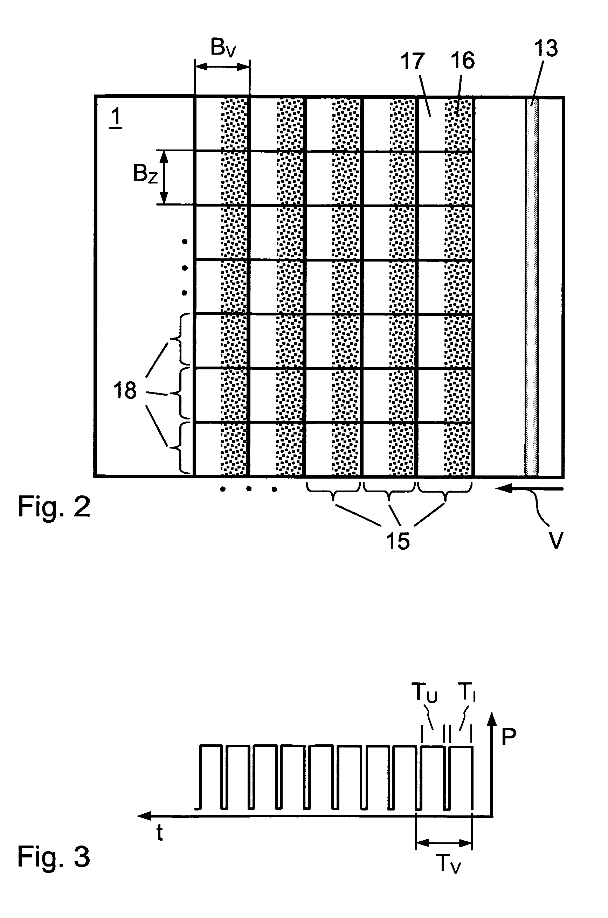

Fig. 2 zeigt eine auszulesende Phosphorschicht 1 in Draufsicht. Auch in der hier gewählten Darstellung sind - wie bei Fig. 1 - die einzelnen Bereiche 15 der Phosphorschicht 1 aus Gründen einer besseren Anschaulichkeit stark vergrößert dargestellt.

Auf der Phosphorschicht 1 ist eine Stimulationslichtlinie 13 eingezeichnet, welche mit der Lichtquelle 4 und dem Detektor 9 einschließlich Abbildungseinrichtung 8 und Filter 11 (siehe Fig. 1) in Vorschubrichtung V relativ zur Phosphorschicht 1 bewegt wird und dabei die einzelnen Bereiche 15 überstreicht. Für den Vorschub um die Breite B_{V} eines Bereichs 15 benötigt der Detektor 9 bzw. die Stimulations-13 eine bestimmte Vorschubdauer T_{V}, welche - im Falle einer konstanten Vorschubgeschwindigkeit - dem Quotienten aus der Breite B_{V} der einzelnen Bereiche 15 und der Vorschubgeschwindigkeit entspricht.

Die Lichtquelle 4 ist jeweils während einer Stimulationsdauer T_{S} eingeschaltet, in welcher die Stimulationslichtlinie 13 jeweils einen ersten Teilbereich 16 der ei n-zelnen Bereiche 15 überstreicht. Nach Ablauf der Stimulationsdauer T_{S} wird die Lichtquelle 4 ausgeschaltet, so dass eine nunmehr "virtuelle Stimulationslichtlinie" einen sich an den ersten Teilbereich 16 anschließenden zweiten Teilbereich 17 überstreicht, ohne diesen mit Stimulationslicht zu bestrahlen. Dementsprechend wird lediglich der erste Teilbereich 16 durch direkte Bestrahlung mit Stimulationslicht zur Aussendung von Emissionslicht angeregt.

Gleichzeitig mit der Stimulationslichtlinie 13 überstreicht die Apertur des Detektors 9 die einzelnen Bereiche 15 der Phosphorschicht 1 nacheinander. Die in einer Zeile angeordneten lichtempfindlichen Flächen 14 des Detektors 9 erfassen dabei das von den zeilenförmigen Bereichen 15 jeweils ausgesandte Emissionslicht 7. Der Detektor 9 ist dabei in der Weise gesteuert, dass dieser während einer Integrationsdauer T_{I} das vom ersten Teilbereich 16 ausgesandte Emissionslicht 7 und anschließend während einer Untergrund-Integrationsdauer T_{U} den Untergrund erfasst. Die Summe aus Untergrund-Integrationsdauer T_{U} und Integrationsdauer T_{I} ist dabei kleiner oder gleich der Vorschubdauer T_{V}, welche der Detektor 9 bzw. die Lichtquelle 4 benötigt, um eine der Breite B_{V} der Bereiche 15 entsprechende Wegstrecke in Vorschubrichtung V zurückzulegen: T_{U} + T_{I} ≤ T_{V}.

Wie in Fig. 2 zu erkennen ist, sind die einzelnen Bereiche 15 jeweils in eine Vielzahl einzelner Elemente 18 unterteilt. Diese Unterteilung wird durch die Erfassung des von den zeilenförmigen Bereichen 15 ausgesandten Emissionslichts mit einem zeilenförmig ausgebildeten Detektor 9 erreicht, wobei die Breite B_{Z} der Elemente 18 der Ausdehnung der einzelnen lichtempfindlichen Detektorelemente 14 in Zeilenrichtung des Detektors 9 entspricht. Die Breite B_{Z} der Elemente 18 liegt typischerweise zwischen etwa 10 µm und 500 µm, vorzugsweise bei etwa 50 µm.

Das von den einzelnen Elementen 18 der Phosphorschicht 1 ausgesandte und von den entsprechenden lichtempfindlichen Flächen 14 des Detektors 9 zeilenweise erfasste Emissionslicht 7 wird im Detektor 9 in entsprechende Emissionslichtsignale umgewandelt, welche die Bildinformationen des ausgelesenen latenten Röntgenbildes repräsentieren. Ebenso wird der von dem Detektor 9 erfasste Untergrund in entsprechende Untergrundsignale umgewandelt, mit welchen die Emissionslichtsignale korrigiert werden, z.B. durch Subtraktion.

Das Auslesen der Phosphorschicht 1 sowie das Erfassen des Untergrunds wird vorzugsweise durch ein Pulssignal gesteuert. Fig. 3 zeigt ein Beispiel für ein solches Pulssignal zur Steuerung des erfindungsgemäßen Verfahrens. Die Pulshöhe P ist hierbei über der Zeit t aufgetragen.

Das dargestellte Pulssignal weist einen periodischen Verlauf einzelner Rechteckpulse auf, deren jeweilige Pulsbreite der Integrationsdauer T_{I} bzw. der Untergrund-Integrationsdauer T_{U} entspricht. Die Summe aus den Pulsbreiten von zwei aufeinanderfolgenden Pulsen ist hierbei kleiner als die Vorschubdauer T_{V}. Bei dem hier dargestellten periodischen Pulssignal entspricht die Vorschubdauer T_{V} genau der doppelten Periodendauer des Pulssignals.

Stimulationsdauer T_{S} und Integrationsdauer T_{I} können identisch sein, d.h. Anregung und Erfassung des Emissionslichts erfolgen im selben Zeitraum. Vorzugsweise werden die Anregung und Erfassung von Emissionslicht jedoch mit zwei unterschiedlichen Pulssignalen gesteuert, die sich in der Breite der Pulse (d.h. die Stimulationsdauer T_{S} ist dann von der Integrationsdauer T_{I} verschieden, insbesondere kürzer) und/oder der Phasenlage der Pulse relativ zueinander (d.h. die Stimulationsdauer T_{S} beginnt zu einem früheren oder späteren Zeitpunkt als die Integrationsdauer T_{I}) unterscheiden. Hierbei wird die Stimulationsdauer T_{S} vorzugsweise so gewählt, dass nach deren Ende das sogenannte Nachleuchten der angeregten Phosphorschicht bereits abgeklungen ist, bevor während der anschließenden Untergrund-Integrationsdauer T_{U} der Untergrund erfasst wird. Dadurch wird verhindert, dass das Nachleuchten bei der Erfassung des Untergrunds fälschlicherweise mit erfasst wird.

Das Auslesen der Bereiche 15 der Phosphorschicht 1 in Fig. 2 wird durch das in Fig. 3 gezeigte Pulssignal im Einzelnen wie folgt gesteuert:
- Zum Zeitpunkt der ansteigenden Flanke des ersten Pulses wird sowohl die Lichtquelle 4 eingeschaltet als auch die Erfassung des von diesem Bereich 15 ausgesandten Emissionslichts durch den Detektor 9 gestartet. Von diesem Zeitpunkt an beginnen die Stimulationsdauer T_{S} und die damit synchronisierte Integrationsdauer T_{I} zu laufen.
- Während der Stimulationsdauer T_{S} bzw. Integrationsdauer T_{I} überstreicht die Stimulationslichtlinie 13 den ersten Teilbereich 16 des Bereichs 15, und das ausgesandte Emissionslicht wird durch den Detektor 9 erfasst.
- Bei Ablauf der Stimulationsdauer T_{S} bzw. Integrationsdauer T_{I} ist die Stimulationslichtlinie 13 am zweiten Teilbereich 17 des Bereichs 15 angekommen.
- Vom Zeitpunkt der abfallenden Flanke des ersten Pulses an werden die Lichtquelle 4 und der Detektor 9 abgeschaltet und weiter in Vorschubrichtung V bewegt.
- Zum Zeitpunkt der ansteigenden Flanke des darauf folgenden zweiten Pulses wird die Erfassung des Untergrunds durch den Detektor 9 gestartet. Von diesem Zeitpunkt an beginnt die Untergrund-Integrationsdauer T_{U} zu laufen. Die Lichtquelle bleibt während dieser Zeit abgeschaltet.
- Nach Ablauf der Vorschubdauer T_{V} beginnt der beschriebene Prozess für den als nächstes auszulesenden Bereich 15 von Neuem.

Die für die einzelnen Bereiche 15 erhaltenen Emissionslichtsignale können mit dem über dem jeweiligen Bereich 15 erhaltenen Untergrundsignal korrigiert werden. Bei dieser Variante wird eine besonders hohe Genauigkeit bei der Elimination des Untergrunds erzielt, da hierbei der Einfluss von Umgebungslicht in unmittelbarer Umgebung des jeweils ausgelesenen Bereichs 15 detektiert wird und/oder zeitlich variable Dunkelströme im Detektor entsprechend zeitnah zum Emissionslicht erfasst werden.

In einer alternativen Variante des Verfahrens wird der Untergrund über mehreren - typischerweise 10 bis 60 - Bereichen 15 erfasst und in mehrere entsprechende Untergrundsignale umgewandelt, die dann einer Mittelung unterzogen werden, bei welcher ein mittleres Untergrundsignal erhalten wird. Zur Korrektur der für die einzelnen Bereiche 15 erhaltenen Emissionslichtsignale wird dann das mittlere Untergrundsignal herangezogen. Bei dieser Variante wird der Rauschanteil im mittleren Untergrundsignal gegenüber den Rauschanteilen in den einzelnen Untergrundsignalen stark reduziert, so dass die anschließende Korrektur der Emissionslichtsignale zu insgesamt besonders geringen Rauschanteilen in den korrigierten Emissionslichtsignalen und damit zu einem besonders günstigen Signal/Rausch-Verhältnis führt.

## Patentansprüche

1. Verfahren zum Auslesen von in einer Phosphorschicht gespeicherten Informationen, bei welchem
- die Phosphorschicht (1) mit von einer Lichtquelle (4) erzeugtem Stimulationslicht (3) zur Aussendung von Emissionslicht (7) angeregt wird und
- das von einem oder mehreren Bereichen (15) der Phosphorschicht (1) ausgesandte Emissionslicht (7) von einem relativ zu der Phosphorschicht (1) bewegten Detektor (9) erfasst und in entsprechende Emissionslichtsignale umgewandelt wird,
- die Lichtquelle (4) während der Bewegung des Detektors (9) relativ zu der Phosphorschicht (1) mindestens einmal vorübergehend abgeschaltet wird,
- bei abgeschalteter Lichtquelle (4) ein Untergrund, welcher insbesondere von Umgebungslicht und/oder Dunkelströmen im Detektor (9) verursacht wird, von dem Detektor (9) erfasst und in ein entsprechendes Untergrundsignal umgewandelt wird und
- das Untergrundsignal für eine Korrektur der Emissionslichtsignale herangezogen wird,
**dadurch gekennzeichnet, dass**
der Untergrund von dem Detektor (9) während einer Untergrund-Integrationsdauer (T_{U}) erfasst wird, welche kleiner ist als eine Vorschubdauer (T_{V}) die benötigt wird, um den Detektor (9) um die Breite (B_{V}) eines Bereichs (15) der Phosphorschicht (1) in Vorschubrichtung (V) des Detektors (9), zu bewegen.

2. Verfahren nach Anspruch 1, **dadurch gekennzeichnet, dass** das von einem Bereich (15) ausgesandte Emissionslicht (7) von dem Detektor (9) während einer Integrationsdauer (T_{I}) erfasst wird, wobei die Summe aus Untergrund-Integrationsdauer (T_{U}) und Integrationsdauer (T_{I}) kleiner oder gleich der Vorschubdauer (T_{V}) ist: T_{U} + T_{I} ≤ T_{V}.

3. Verfahren nach Anspruch 1 oder 2, **dadurch gekennzeichnet, dass** das von einem Bereich (15) ausgesandte Emissionslicht (7) von dem Detektor (9) während einer Integrationsdauer (T_{I}) erfasst wird, welche gleich der Untergrund-Integrationsdauer (T_{U}) ist.

4. Verfahren nach Anspruch 2 oder 3, **dadurch gekennzeichnet, dass** die Phosphorschicht (1) in einem Bereich (15) während einer Stimulationsdauer (T_{S}) zur Aussendung von Emissionslicht (7) angeregt wird, wobei die Stimulationsdauer (T_{S}) kleiner oder gleich der Integrationsdauer (T_{I}) ist.

5. Verfahren nach einem der vorangehenden Ansprüche, **dadurch gekennzeichnet, dass** der Detektor (9) und/oder die Lichtquelle (4) relativ zu der Phosphorschicht (1) mit einer konstanten Vorschubgeschwindigkeit bewegt wird bzw. werden.

6. Verfahren nach Anspruch 5, **dadurch gekennzeichnet, dass** die Vorschubdauer (T_{V}) dem Quotienten aus der Breite (B_{V}) eines Bereichs (15) und der Vorschubgeschwindigkeit entspricht.

7. Verfahren nach einem der vorangehenden Ansprüche, **dadurch gekennzeichnet, dass** die Bereiche (15) der Phosphorschicht (1) jeweils die Form einer Zeile aufweisen, wobei der Detektor (9) und/oder die Lichtquelle (4) senkrecht zur Längsausdehnung der Zeile relativ zur Phosphorschicht (1) bewegt wird bzw. werden.

8. Verfahren nach einem der vorangehenden Ansprüche, **dadurch gekennzeichnet, dass** die Erfassung des Untergrunds und die Erfassung des Emissionslichts (7) durch ein Pulssignal (P) gesteuert wird, wobei die Untergrund-Integrationsdauer (T_{U}) bzw. die Integrationsdauer (T_{I}) durch die jeweilige Pulsbreite der einzelnen Pulse des Pulssignals (P) gegeben ist.

9. Verfahren nach Anspruch 8, **dadurch gekennzeichnet, dass** das Pulssignal (P) ein periodisches Pulssignal ist, welches eine Periodendauer aufweist, die der halben Vorschubdauer (T_{V}) entspricht.

10. Verfahren nach einem der vorangehenden Ansprüche, **dadurch gekennzeichnet, dass**
- bei einer Bewegung des Detektors (9) um mehrere Breiten (B_{V}) in Vorschubrichtung (V) der Untergrund mehrmals erfasst und dabei in mehrere entsprechende Untergrundsignale umgewandelt wird,
- die Untergrundsignale gemittelt werden, wobei ein mittleres Untergrundsignal erhalten wird, und
- das mittlere Untergrundsignal für eine Korrektur der Emissionslichtsignale eines oder mehrerer einzelner Bereiche (15) der Phosphorschicht (1) herangezogen wird.

## Claims

1. A method of reading out information stored in a phosphor layer wherein
- the phosphor layer (1) is stimulated by stimulation light (3) produced by a light source (4) to emit emission light (7), and
- the emission light (7) emitted by one or a number of regions (15) of the phosphor layer (1) is collected by a detector (9) moved relative to the phosphor layer (1) and converted into corresponding emission light signals,
- during the movement of the detector (9) relative to the phosphor layer (1) the light source (4) is temporarily turned off at least once,
- with the turned off light source (4) a background, which is caused in particular by ambient light and/or dark currents in the detector (9), is collected by the detector (9) and converted into a corresponding background signal, and
- the background signal is used for a correction of the emission light signals,
**characterised in that**
the background is collected by the detector (9) during a background integration period (Tᵤ) which is smaller than a feed period (Tᵥ) which is required in order to move the detector (9) by the width (Bᵥ) of a region (15) of the phosphor layer (1) in feed direction (V) of the detector (9).

2. The method according to Claim 1, **characterised in that** the emission light (7) emitted by a region (15) is collected by the detector (9) during an integration period (T_{I}), the sum of the background integration period (Tᵤ) and the integration period (T_{I}) being smaller than or equal to the feed period (Tᵥ): Tᵤ + T_{I} ≤Tᵥ.

3. The method according to Claim 1 or 2, **characterised in that** the emission light (7) emitted by a region (15) is collected by the detector (9) during an integration period (T_{I}) which is equal to the background integration period (Tᵤ).

4. The method according to Claim 2 or 3, **characterised in that** the phosphor layer (1) is stimulated in a region (15) during a stimulation period (Tₛ) to emit emission light (7), the stimulation period (Tₛ) being smaller than or equal to the integration period (T_{I}).

5. The method according to any of the preceding claims, **characterised in that** the detector (9) and/or the light source (4) is/are moved relative to the phosphor layer (1) at a constant feed speed.

6. The method according to Claim 5, **characterised in that** the feed period (Tᵥ) corresponds to the quotient of the width (Bᵥ) of a region (15) and the feed speed.

7. The method according to any of the preceding claims, **characterised in that** the regions (15) of the phosphor layer (1) are respectively in the form of a line, the detector (9) and/or the light source (4) being moved perpendicularly to the longitudinal extension of the line relative to the phosphor layer (1).

8. The method according to any of the preceding claims, **characterised in that** the collection of the background and the collection of the emission light (7) is controlled by a pulse signal (P), the background integration period (Tᵤ) and the integration period (T_{I}) being given by the respective pulse width of the individual pulses of the pulse signal (P).

9. The method according to Claim 8, **characterised in that** the pulse signal (P) is a periodic pulse signal which has a period duration which corresponds to half the feed period (Tᵥ).

10. The method according to any of the preceding claims, **characterised in that**
- with a movement of the detector (9) by a number of widths (Bᵥ) in feed direction (V), the background is collected a number of times and is thus converted into a number of corresponding background signals,
- the background signals are averaged, an average background signal being obtained, and
- the average background signal is used for a correction of the emission light signals of one or a number of individual regions (15) of the phosphor layer (1).

## Revendications

1. Procédé de lecture d'informations enregistrées dans une couche de phosphore, dans lequel
- la couche de phosphore (1) est excitée par une lumière de stimulation (3) produite par une source lumineuse (4) pour émettre une lumière d'émission (7), et
- la lumière d'émission (7) émise par une ou plusieurs zones (15) de la couche de phosphore (1) est captée par un détecteur (9) en déplacement par rapport à la couche de phosphore (1) et est transformée en des signaux de lumière d'émission correspondants,
- la source lumineuse (4) est, au moins une fois, temporairement éteinte lors du déplacement du détecteur (9) par rapport à la couche de phosphore (1),
- pendant que la source lumineuse (4) est éteinte, un fond, causé notamment par la lumière ambiante et/ou des courants d'obscurité du détecteur (9), est capté par le détecteur (9) et converti en un signal de fond correspondant, et
- le signal de fond est exploité pour corriger les signaux de lumière d'émission,
**caractérisé en ce que**
le fond est capté par le détecteur (9) au cours d'une durée d'intégration de fond (T_{U}) qui est plus courte qu'une durée d'avancée (T_{V}) nécessaire au déplacement du détecteur (9) sur la largeur (B_{V}) d'une zone (15) de la couche de phosphore (1) dans la direction d'avancée (V) du détecteur (9).

2. Procédé selon la revendication 1, **caractérisé en ce que** la lumière d'émission (7) émise par une zone (15) est captée par le détecteur (9) au cours d'une durée d'intégration (T_{I}), la somme de la durée d'intégration de fond (T_{U}) et de la durée d'intégration (T_{I}) étant inférieure ou égale à la durée d'avancée (T_{V}) : T_{U} + T_{I}≤ T_{V}.

3. Procédé selon la revendication 1 ou 2, **caractérisé en ce que** la lumière d'émission (7) émise par une zone (15) est captée par le détecteur (9) au cours d'une durée d'intégration (T_{I}) qui est égale à la durée d'intégration de fond (T_{U}).

4. Procédé selon la revendication 2 ou 3, **caractérisé en ce que** la couche de phosphore (1) est excitée dans une zone (15) pendant une durée de stimulation (T_{S}) pour émettre de la lumière d'émission (7), la durée de stimulation (T_{S}) étant inférieure ou égale à la durée d'intégration (T_{I}).

5. Procédé selon l'une des revendications précédentes, **caractérisé en ce que** le détecteur (9) et/ou la source lumineuse (4) subissent un déplacement par rapport à la couche de phosphore (1) à une vitesse d'avancée constante.

6. Procédé selon la revendication 5, **caractérisé en ce que** la durée d'avancée (T_{V}) correspond au quotient de la largeur (B_{V}) d'une zone (15) et de la vitesse d'avancée.

7. Procédé selon l'une des revendications précédentes, **caractérisé en ce que** les zones (15) de la couche de phosphore (1) présentent respectivement la forme d'une ligne, le détecteur (9) et/ou la source lumineuse (4) subissant un déplacement perpendiculairement à l'étendue longitudinale de la ligne par rapport à la couche de phosphore (1).

8. Procédé selon l'une des revendications précédentes, **caractérisé en ce que** la captation du fond et la captation de la lumière d'émission (7) est commandée par un signal d'impulsion (P), la durée d'intégration de fond (T_{U}) ou, suivant le cas, la durée d'intégration (T_{I}) étant donnée par la largeur d'impulsion respective des diverses impulsions du signal d'impulsion (P).

9. Procédé selon la revendication 8, **caractérisé en ce que** le signal d'impulsion (P) est un signal d'impulsion périodique présentant une période correspondant à la moitié de la durée d'avancée (T_{V}).

10. Procédé selon l'une des revendications précédentes, **caractérisé en ce que**
- le fond est capté plusieurs fois lors d'un déplacement du détecteur (9) sur plusieurs largeurs (B_{V}) dans la direction d'avancée (V) et est alors converti en plusieurs signaux de fond correspondants,
- les signaux de fond sont moyennés, produisant un signal de fond moyen, et
- le signal de fond moyen est exploité pour corriger les signaux de lumière d'émission d'une ou de plusieurs zones diverses (15) de la couche de phosphore (1).
